# EUROPÄISCHE PATENTANMELDUNG

(11) **EP 4 574 400 A1**
(43) Veröffentlichungstag der Anmeldung: **25.06.2025**
(21) Anmeldenummer: 24219400.9
(22) Anmeldetag: 12.12.2024
(51) Int. Cl.: B29C 65/08, B29C 65/78, B29C 65/00, B29L 31/00

(54) **VERFAHREN UND VORRICHTUNG ZUM VERSCHWEISSEN EINES VEREINZELTEN, MEHRLAGIGEN PRODUKTS**

(30) Priorität: 21.12.2023 DE 102023136343
(71) Anmelder: Herrmann Ultraschalltechnik GmbH & Co. KG, 76307 Karlsbad (DE)
(72) Erfinder: Runck, Andreas, 76133 Karlsruhe (DE); Deeg, Julian, 75210 Keltern (DE); Petmecky, Philipp, 76228 Karlsruhe (DE); Dejager, Hermann, 58566 Marienheide (DE); Beinghaus, Jürgen, 51688 Wipperfürth (DE)
(74) Vertreter: WSL Patentanwälte Partnerschaft mbB

(57) **Zusammenfassung**

Verfahren und Vorrichtung zum Verschweißen eines vereinzelten, mehrlagigen Produkts.

## Beschreibung

Die vorliegende Erfindung betrifft ein Verfahren und eine Vorrichtung zum Verschweißen eines vereinzelten, mehrlagigen Produkts.

Das Ultraschallschweißen hat sich in vielen Bereichen der Produktherstellung als sehr vorteilhaftes Verfahren erwiesen. Zwei Schwerpunkte des Ultraschallschweißens sind kontinuierliche Verfahren, bei denen beispielsweise mehrlagige Materialbahnen kontinuierlich verschweißt werden, und diskontinuierliche Verfahren, bei denen beispielsweise durch eine Person in Akkordarbeit wiederholt zwei Bauteile einer Baugruppe aneinandergefügt werden. Ein kontinuierliches Verfahren ist aus DE 10 2014 110 634 A1 bekannt.

Im Bereich der Produktionstechnik gibt es noch Fügeprozesse, die bisher nicht mittels Ultraschallschweißen umgesetzt werden können, zum Beispiel das fortlaufende Verschließschweißen von vereinzelten Behältern, insbesondere Beuteln. Beim Verschließschweißen wird ein vereinzelter, noch offener Behälter mittels einer Schweißnaht verschlossen. Der Behälter ist üblicherweise zuvor befüllt worden, beispielsweise mit Lebensmitteln, Tierfutter oder Pflegeprodukten. Durch die Schweißnaht werden mehrere Lagen des Behälters, üblicherweise zwei den Behälter begrenzende Wandungen, miteinander verschweißt. Beim Verschließschweißen ist es von erheblicher Bedeutung, dass die Schweißnaht den Behälter luftdicht verschließt, um den Inhalt vor der Umgebungsluft zu schützen.

Die DE 10 2013 100 474 A1 betrifft eine Ultraschallschweißeinrichtung zum Versiegeln von vereinzelten Produkten, insbesondere der Giebelnaht einer Milchpackung. Die DE 10 2015 110 387 A1 offenbart eine Ultraschallschweißvorrichtung, mit der ebenfalls einzelne Verbundpackungen verschweißt werden können. Die US 3,294,616 zeigt eine Ultraschallschweißvorrichtung, bei der durch einen Anschlag ein Minimalspalt eingestellt wird. Aus der DE 10 2017 107 617 A1 und der DE 10 2022 105 944 A1 sind zwei Verfahren zur intermittierenden Bearbeitung einer Materialbahn durch Ultraschall bekannt.

Die aus dem Stand der Technik bekannten Ultraschallschweißverfahren sind nicht zufriedenstellend für das fortlaufende Verschließschweißen von vereinzelten Behältern/Verpackungen geeignet. Bei früheren Versuchen mit kontinuierlichen Ultraschallschweißverfahren wurde der Behälter beschädigt, insbesondere an seinen Kanten, oder die Schweißnaht wurde durch den Schweißvorgang nicht dicht, was nicht akzeptabel ist.

Diskontinuierliche Verfahren kommen für das Verschließschweißen vereinzelter Beutel in Betracht. Sie dauern jedoch oft länger und können nur durch erheblichen Aufwand in Produktionsabläufe der Fließfertigung eingebaut werden.

Es war daher Aufgabe der Erfindung, eine Möglichkeit bereitzustellen, vereinzelte Produkte schnell und sicher fortlaufend zu verschweißen.

Diese Aufgabe wird durch das erfindungsgemäße Verfahren und die erfindungsgemäße Vorrichtung gelöst.

Bei dem Verfahren zum Verschweißen eines vereinzelten, mehrlagigen Produkts mittels eines Ultraschallwerkzeugs, welches einen Generator, einen Amboss und ein Schwinggebilde mit einem Konverter, einer Sonotrode und optional einem Transformationsstück (Amplitudenverstärker), umfasst, wird das Produkt durch einen zwischen Sonotrode und Amboss gebildeten Spalt mit einer Spaltbreite S bewegt. Das (vereinzelte) Produkt wird während seiner Bewegung von dem Ultraschallwerkzeug entlang eines Schweißpfades verschweißt, indem Sonotrode und/oder Amboss mit einer Kraft gegen das Produkt gedrückt werden und die Sonotrode von dem Generator derart angeregt wird, dass sie mit einer vorgegebenen Amplitude schwingt und die Schwingung auf das Produkt überträgt. Mindestens ein Schweißparameter, vorzugsweise die Amplitude und/oder die Kraft und/oder die Spaltbreite wird während der Bewegung des Produkts geregelt und variiert.

Andere Schweißparameter können dabei auch nur geregelt werden ohne variiert zu werden. Sie können dann beispielsweise auf einen konstanten Sollwert eingestellt werden.

Beim Verschweißen von vereinzelten Produkten ist die Situation im Spalt nicht immer gleich, wie es beispielsweise bei kontinuierlichen Schweißverfahren von Materialbahnen der Fall ist. Zu manchen Zeiten befindet sich ein Produkt im Spalt, zu anderen nicht. Eine besondere Herausforderung sind die Randbereiche der vereinzelten Produkte, also der Übergang zwischen den Situationen mit Produkt im Spalt und ohne. Durch die Variation eines der Schweißparameter kann die Verschwei-βung an die aktuell im Spalt vorhandene Situation angepasst und der Übergang überbrückt werden. So kann beispielsweise durch eine verringerte Amplitude in Randbereichen des Produkts weniger Schweißenergie eingebracht werden, wodurch die Kanten nicht beschädigt werden. Vorteilhafterweise beginnt der Schweißpfad daher in einem ersten Randbereich des Produkts und/oder endet in einem zweiten Randbereich des Produkts. Dadurch wird eine Beschädigung der Kanten vermieden.

Die Amplitude ist eine übliche Prozessgröße. Unter einer vorgegebenen Amplitude wird ein Sollwert verstanden, der beispielsweise am Ultraschallwerkzeug eingegeben werden kann.

Das erfindungsgemäße Verfahren ist insbesondere ein Verfahren zum Verschweißen von mehreren vereinzelten, mehrlagigen Produkten. In diesem Fall werden mehrere Produkte nacheinander durch den Spalt bewegt und jedes Produkt wird während seiner Bewegung von dem Ultraschallwerkzeug entlang eines Schweißpfades verschweißt, wobei die Produkte insbesondere zueinander beabstandet sind.

Ein Anwendungsfall für das Verfahren ist das Verschließschweißen von Beuteln oder ähnlichen Verpackungen. Derartige Beutel bestehen in der Regel aus mindestens zwei Lagen eines Materials, die in der Regel gleich groß sind und übereinandergelegt werden. Anschließend werden die Lagen an drei Kanten (links, rechts und unten) stoffschlüssig miteinander verbunden, oftmals durch Wärmesiegelung. Andere Verbindungsarten, beispielsweise Ultraschallschweißen, sind ebenfalls möglich. Der so hergestellte offene Beutel kann dann mit Inhalt befüllt werden. Anschließend muss die Öffnung des Beutels verschlossen werden, um den Inhalt vor Umwelteinflüssen zu schützen. Die wärmegesiegelten Randbereiche stellen eine harte Kante dar. An dieser Kante erfahren Ultraschallwerkzeuge einen starken Impuls, was bei Versuchen mit konstanten Schweißparametern zu Beschädigungen in den Randbereichen geführt hat. Das erfindungsgemäße Verfahren eignet sich besonders für das Verschließschweißen, da durch die Variation der Schweißparameter auch eine Anpassung an die zuvor stoffschlüssig verbundenen Lagen möglich ist. Bei vorteilhaften Weiterbildungen werden die Produkte demnach in mindestens einem der Randbereiche stoffschlüssig verschlossen, bevor sie durch den Spalt bewegt werden. Die Breite der Randbereiche beträgt bevorzugt 5-8 mm. Das Produkt des Verfahrens ist demnach bevorzugt ein Beutel, insbesondere ein oben offener Beutel und/oder ein mit Inhalt befüllter Beutel.

Die in das Produkt eingebrachte Schweißenergie wird maßgeblich von der Amplitude beeinflusst. Daher hat es sich als besonders vorteilhaft erwiesen, die Amplitude zu variieren. Vorteilhafterweise wird die Sonotrode daher zum Verschweißen des Produkts derart angeregt, dass sie mit einer Amplitude A_{high} schwingt, wobei A_{high} bevorzugt zwischen 20 µm und 40 µm beträgt, und die Sonotrode zu anderen Zeiten derart angeregt wird, dass sie mit einer Amplitude A_{low}, die kleiner als A_{high} ist, schwingt, wobei bevorzugt Folgendes gilt: 0 < A_{low} und/oder A_{low} < 0,5 * A_{high}. Die niedrige Amplitude A_{low} wird insbesondere verwendet, wenn kein Produkt im Spalt angeordnet ist. Die Verringerung der Amplitude reduziert den Impuls, welchen das Ultraschallwerkzeug erfährt, wenn die Kante der Produkte in den Spalt bewegt wird. Dadurch erleidet der Randbereich weniger Beschädigungen. Unterhalb von 0,5 * A_{high} wird nahezu keine Schweißwirkung erzielt, was aber im Randbereich auch nicht nötig ist, da die Lagen dort bereits stoffschlüssig miteinander verbunden sind. Die Amplitude wird bevorzugt nicht auf 0 abgesenkt, damit die Erhöhung auf A_{high} weniger Zeit in Anspruch nimmt. Dadurch kann die Geschwindigkeit, mit welcher die Produkte durch den Spalt bewegt werden, erhöht und/oder der Abstand der Produkte untereinander verringert werden. Die Herstellung wird somit insgesamt beschleunigt. Unterhalb von 20 µm wird keine ausreichende Verschweißung erzielt, oberhalb von 40 µm kann die Verschweißung beschädigt und undicht werden. Der Abstand der Produkte untereinander beträgt bevorzugt 10 mm bis 250 mm, insbesondere 30°mm bis 180°mm.

Der Schweißparameter des Ultraschallwerkzeugs wird bevorzugt in Abhängigkeit von der Bewegung oder der Position des Produkts geregelt. Insbesondere wird die Amplitude auf A_{high} eingestellt wird, wenn das Produkt am oder vor dem Spalt ankommt und/oder die Amplitude wird auf A_{low} eingestellt, wenn das Produkt den Spalt verlässt. So wird sichergestellt, dass der eigentliche Verschweißvorgang über den gewünschten Schweißpfad erfolgt. Im Falle des Verschließschweißens von Beuteln konnte so eine dichte und feste Verschweißung erzielt werden, ohne dass die Kanten beschädigt wurden.

Die Variation des Schweißparameters kann in Abhängigkeit von unterschiedlichen Mechanismen erfolgen. So kann die Variation in Abhängigkeit von der Zeit erfolgen, also zeitgesteuert. In diesem Fall kann in einer Steuerung des Generators ein Programm hinterlegt sein, welches den Schweißparameter über der Zeit variiert. Wenn die Geschwindigkeit der Produkte bekannt ist, dann kann eine solche Steuerung ausreichen. Die Geschwindigkeit der Produkte kann auch eine Eingangsgröße für die Variierung der Schweißparameter sein. Um eine präzisere Anpassung des Schweißparameters zu erreichen, ist bei vorteilhaften Weiterbildungen vorgesehen, dass die Position des zu verschweißenden Produkts zumindest einmal erfasst wird. So kann mittels einer Sensoreinheit erfasst werden, ob das Produkt am Spalt ankommt oder das Produkt den Spalt verlässt. Im Anschluss daran kann der Schweißparameter angepasst werden. Besonders bevorzugt sendet die Sensoreinheit ein Signal direkt an den Generator sendet und der Generator stellt, optional zeitverzögert, die Amplitude auf A_{high} oder A_{low} ein. Durch die direkte Verbindung von Sensoreinheit und Generator wird ein Zeitverlust durch die Signalverarbeitung in einer Steuerung vermieden. Das Signal ist bevorzugt ein binäres Signal, wodurch bei der Verarbeitung durch den Generator Zeit eingespart wird. Wenn die Sensoreinheit bzw. der Ort der Erfassung des Produkts von dem Spalt beabstandet ist, kann durch die Zeitverzögerung die Zeit, welche das Produkt noch benötigt, um beim Spalt anzukommen, ausgeglichen werden.

Um Schäden an dem Produkt und dem Ultraschallwerkzeug zu vermeiden, erfolgt ein Übergang von einer aktuellen Amplitude A_{now} auf eine Zielamplitude, insbesondere A_{high} oder A_{low}, bevorzugt durch eine kontinuierliche Anpassung (Rampe) der Amplitude, wobei eine Steigung der Rampe bevorzugt kontinuierlich geregelt wird und/oder wobei die Rampe innerhalb eines der Randbereich liegt oder mit einem der Randbereiche überlappt. Gleiches gilt auch bevorzugt für andere Schweißparameter.

Zu unterschiedlichen Zeiten während des Ablaufs des erfindungsgemäßen Verfahrens kann sich ein Produkt in dem Spalt befinden oder der Spalt kann frei sein. Damit im letzten Fall das nächste ankommende Produkt in den Spalt gelangen kann und gleichzeitig eine sofortige Bearbeitung des Produkts möglich ist, wird die Spaltbreite S des Spaltes bevorzugt kontinuierlich eingestellt, indem Sonotrode und/oder Amboss relativ zueinander bewegt werden, wobei bevorzugt eine Metallkontakterkennung und/oder eine Abstandsmessung als Eingangsgröße für eine Regelung der Größe des Spalts verwendet wird und/oder eine Sollgröße für den Spalt festgelegt und als Eingangsgröße für die Regelung der Spaltbreite S verwendet wird. Bei kontinuierlichen Schweißverfahren, beispielsweise von Materialbahnen, ist eine Regelung der Spaltbreite nicht sinnvoll, da sich ohnehin immer Material zwischen Sonotrode und Amboss befindet. Die Spaltbreite S ist bevorzugt der kürzeste Abstand zwischen Amboss und Sonotrode.

Wie oben erwähnt, wird das Produkt bevorzugt mit Inhalt befüllt, bevor es durch den Spalt bewegt und verschweißt wird. Dadurch werden nachfolgende Arbeitsschritte vermieden und das erfindungsgemäße Verfahren kann den letzten Arbeitsschritt bei der Herstellung eines befüllten Produkts darstellen.

Die Wirtschaftlichkeit des Verfahrens hängt maßgeblich von der Geschwindigkeit der Produkte ab. Die Geschwindigkeit kann außerdem einen Einfluss auf die Qualität der Schweißnaht haben. Gleichzeitig muss sichergestellt werden, dass die Produkte gleichmäßig und sicher verschweißt werden. Bevorzugt wird das Produkt mit einer Geschwindigkeit von 5 m/min bis 100 m/min durch den Spalt bewegt. Unterhalb von 5 m/min werden nicht genug Produkte pro Zeiteinheit hergestellt, oberhalb von 100 m/min kann es zu Fehlern bei der Verschweißung kommen.

Neben der Geschwindigkeit haben auch die Anzahl und die Dicke der Lagen des Produkts einen Einfluss auf die Qualität der Schweißnaht. Bevorzugt umfasst das Produkt wenigstens zwei Lagen, bevorzugt mit einer Lagendicke von jeweils zwischen 50 µm und 300 µm. Bei Lagendicken unterhalb von 50 µm kann die eingebrachte Schweißenergie zu groß sein und es kommt zu einer Beschädigung der Lagen, die zu einer undichten Verschweißung führt. Oberhalb von 300 µm kann die eingebrachte Schweißenergie zu gering sein und es wird ebenfalls keine dichte Verschweißung erzielt.

Die erfindungsgemäße Vorrichtung zum Verschweißen eines vereinzelten, mehrlagigen Produkts weist ein Ultraschallwerkzeug und eine Fördereinrichtung auf. Das Ultraschallwerkzeug umfasst einen Generator, einen Konverter, eine Sonotrode und einen Amboss, wobei zwischen Sonotrode und Amboss ein Spalt mit einer Spaltbreite S gebildet wird, wobei der Generator eingerichtet ist, die Sonotrode derart anzuregen, dass diese mit einer Amplitude schwingt und wobei das Ultraschallwerkzeug eingerichtet ist, Sonotrode und/oder Amboss mit einer Kraft gegen das Produkt zu drücken. Mindestens ein Schweißparameter des Ultraschallwerkzeugs, vorzugsweise die Amplitude und/oder die Kraft und/oder die Spaltbreite, ist regelbar und variierbar. Die Fördereinrichtung ist eingerichtet, das vereinzelte Produkt durch den Spalt zu bewegen, bevorzugt derart zu bewegen, dass das Produkt während seiner Bewegung von dem Ultraschallwerkzeug entlang eines Schweißpfades verschweißt wird, indem die Sonotrode von dem Generator derart angeregt wird, dass sie mit einer vorgegebenen Amplitude schwingt und die Schwingung auf das Produkt überträgt.

Konverter und Sonotrode bilden eine Schwingeinheit des Ultraschallwerkzeugs. Die Schwingeinheit kann zudem einen Amplitudenverstärker umfassen.

Das Ultraschallwerkzeug, insbesondere der Generator, und die Fördereinrichtung sind bevorzugt an eine gemeinsame Steuerungseinrichtung angeschlossen.

Wie oben beschrieben ist eine Erfassung des Produkts für die Verschweißung von Vorteil. Bevorzugt umfasst die Vorrichtung daher ferner eine Sensoreinheit, welche eingerichtet ist, zu erfassen, ob das Produkt am oder vor dem Spalt ankommt oder ob das Produkt den Spalt verlässt. In Abhängigkeit des Sensorsignals kann der gewünschte Schweißparameter dann variiert werden. Die Sensoreinheit ist besonders bevorzugt direkt mit dem Generator verbunden. Dadurch wird eine Zeitverzögerung durch eine zwischengeschaltete Steuerung vermieden. Der Generator ist in diesem Fall eingerichtet, auf ein Signal der Sensoreinheit hin den Schweißparameter, insbesondere die Amplitude, zu variieren. Die Amplitude kann beispielsweise über eine Veränderung der Frequenz, mit welcher der Generator den Konverter anregt, erfolgen.

Bei vorteilhaften Weiterbildungen umfasst die Sensoreinheit mindestens einen Sensor, bevorzugt einen optischen Sensor und/oder einen kapazitiven Sensor, welcher derart ausgerichtet ist, dass das Produkt in einen Detektionsbereich des Sensors und/oder aus einem Detektionsbereich des Sensors bewegt wird, wenn es am oder vor dem Spalt ankommt und/oder wenn es den Spalt verlässt. Auf diese Weise kann die Ankunft am Spalt oder das Verlassen des Spalts sicher erfasst werden. Der Sensor kann beispielsweise ein optischer Reflexionsschalter sein.

Die Fördereinrichtung umfasst bevorzugt bewegbare Greifer, die eingerichtet sind, jeweils eines oder mehrere Produkte zu greifen. Ferner umfasst die Fördereinrichtung bevorzugt einen Stetigförderer, insbesondere ein Förderband, mittels welchem die Greifer bewegt werden können. Besonders bevorzugt handelt es sich bei der Fördereinrichtung um ein Linearachsensystem mit Greifern.

Bei vorteilhaften Weiterbildungen weisen die Sonotrode und/oder der Amboss eine zumindest teilweise kreisförmige Außenkontur auf und sind drehbar gelagert. Die kreisförmige Außenkontur stellt eine körperliche Rampe für ein am Spalt ankommendes Produkt dar. Dadurch wird der Impuls, welcher bei der Ankunft des Produkts im Spalt entsteht, abgemildert. Auch die Drehbarkeit verringert den Impuls, da die Sonotrode bzw. der Amboss mit dem Produkt mitgehen kann. Besonders bevorzugt wird das drehende Teil sogar aktiv gedreht, insbesondere derart, dass es mit dem Produkt mitgeht.

Wie oben beschrieben wird die Spaltbreite S bevorzugt geregelt. Bei der Vorrichtung sind die Sonotrode und/oder der Amboss daher bevorzugt relativ zueinander verschiebbar. Bevorzugt ist eine Spaltregelungseinrichtung zwischen Sonotrode und Amboss elektrisch an eine Metallkontakterkennungseinrichtung angeschlossen. Alternativ oder zusätzlich ist ein Sensor zur Erfassung eines Abstands zwischen Sonotrode und Amboss möglich. Durch die Verschiebbarkeit kann die Spaltbreite S eingestellt werden. Der Abstandssensor bietet ein Eingangssignal für die Regelung der Spaltbreite S. Alternativ kann die Spaltbreite S fest eingestellt werden. Die Vorrichtung ist dann insgesamt weniger komplex.

Die Erfindung wird anhand der Zeichnungen beispielhaft dargestellt und erläutert. Es zeigt
- Figur 1: eine Ausführungsform einer Vorrichtung zum Verschweißen eines vereinzelten, mehrlagigen Produkts in einer Vorderansicht,
- Figur 1x: das Detail X der Figur 1,
- Figur 2: die Vorrichtung gemäß Figur 1 in einer Draufsicht und
- Figur 3: schematisch die Verschweißung eines Produkts.

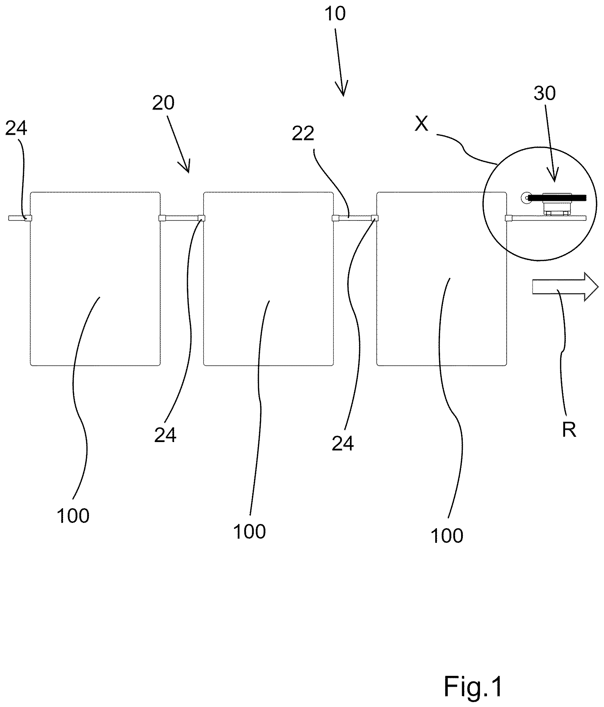

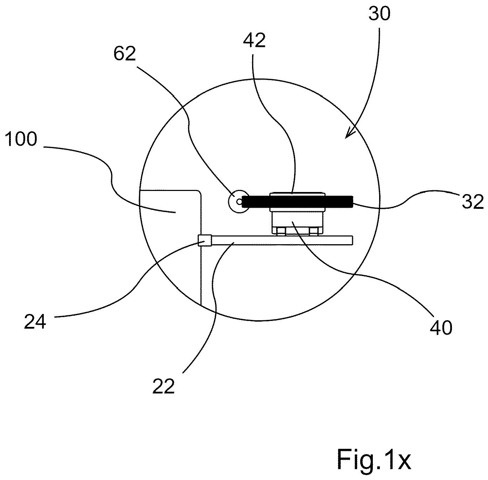

Die in Figur 1 dargestellte Vorrichtung 10 weist eine Fördereinrichtung 20 und ein Ultraschallwerkzeug 30 auf. Die Fördereinrichtung 20 umfasst bei dieser Ausführungsform ein Förderband 22 mit Greifelementen 24. Die Greifelemente 24 können mittels des Förderbands 22 in eine Förderrichtung R bewegt werden. Das Förderband 22 bewegt sich dabei mit einer gleichbleibenden Geschwindigkeit. Die Greifelemente 24 sind eingerichtet, einzelne Produkte 100, hier Beutel, zu greifen. Auf diese Weise werden die Produkte 100 fortlaufend und mit der gleichen Geschwindigkeit in die Förderrichtung R bewegt. Die Greifelemente 24 sind zueinander beabstandet, sodass auch die Produkte 100 zueinander beabstandet transportiert werden.

Bei den Produkten 100 handelt es sich bei der hier gezeigten Ausführungsform um mehrlagige Beutel, die oben offen und mit Inhalt befüllt sind. Die Beutel sind nur schematisch dargestellt.

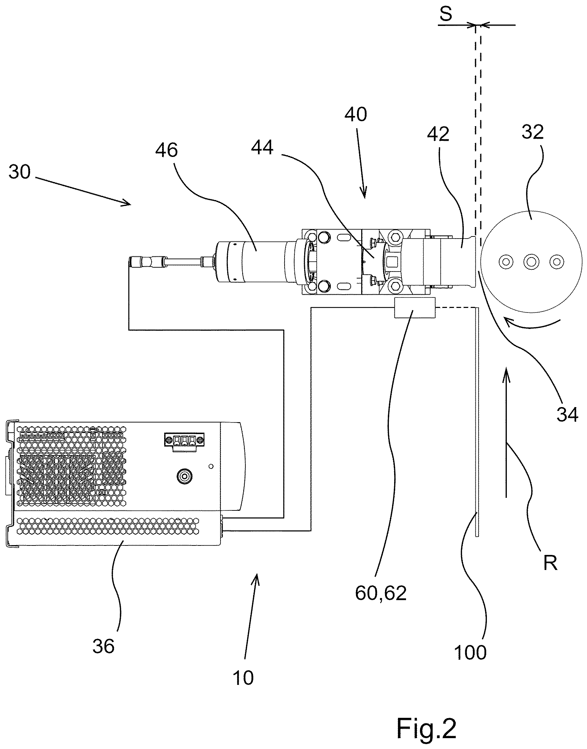

Das Ultraschallwerkzeug 30 ist in den Figuren 1x und 2 näher dargestellt. Es umfasst einen Generator 36, einen Amboss 32 und eine Schwingeinheit 40 mit einer Sonotrode 42, einem Amplitudenverstärker 44 und einem Konverter 46. Der Amboss 32 ist drehbar gelagert und wird aktiv rotiert. Der Konverter 46 wird von dem Generator 36 mit einer Spannung versorgt. Die Schwingeinheit 40 ist derart ausgestaltet, dass sie in Resonanz schwingt, wenn der Konverter 46 von dem Generator 36 mit Spannung einer vordefinierten Frequenz angeregt wird. Die Sonotrode 42 schwingt dabei mit einer Amplitude, die u.a. von der Anregungsfrequenz abhängt. Die Amplitude wird insbesondere entlang der Hauptachse der Schwingeinheit 40 gemessen. Der Generator 36 ist eingerichtet, die Sonotrode 42 bzw. die Schwingeinheit 40 mit verschiedenen Amplituden anzuregen, insbesondere einer hohen Amplitude A_{high} und einer niedrigen Amplitude A_{low}.

Sonotrode 42 und Amboss 32 bilden zwischen sich einen Spalt 34 aus, der eine Spaltbreite S aufweist. Die Spaltbreite S ist bevorzugt der kürzeste Abstand zwischen Amboss 32 und Sonotrode 42. Die niedrige Amplitude A_{low} beträgt bei der gezeigten Ausführungsform 30 % der hohen Amplitude A_{high} (A_{low} = 0,3 • A_{high}). Mit der niedrigen Amplitude A_{low} erfolgt keine oder nahezu keine Verschweißung, wenn sich ein Beutel in dem Spalt 34 befindet. Die hohe Amplitude A_{high} hingegen bewirkt ein Verschweißen der Lagen des Beutels an den Stellen, wo sich der Beutel zwischen Amboss 32 und Sonotrode 42 befindet.

Die Spaltregelungseinrichtung zwischen Sonotrode 42 und Amboss 32 ist an eine Metallkontakterkennung angeschlossen. Eine Regelung, die hierzu verwendet werden kann, ist beispielsweise aus EP 0 790 888 B1 bekannt. Durch die Metallkontakterkennung wird die Spaltbreite S kontinuierlich geregelt. Gleichzeitig werden Sonotrode 42 und Amboss 32 mit einer Kraft beaufschlagt, wodurch eine Kraft auf die Produkte 100 ausgeübt wird, wenn sie sich in dem Spalt 34 befinden.

Die Produkte 100 werden wie oben beschrieben von der Fördereinrichtung 20 (in Figur 2 nicht dargestellt) in der Förderrichtung R bewegt. Dadurch gelangen die Produkte 100, eines nach dem anderen, in den Spalt 34, durchqueren diesen und verlassen den Spalt 34 anschließend wieder. Wird die Schwingeinheit 40 während der Bewegung angeregt, so werden die Lagen des jeweiligen Produkts 100 miteinander verschweißt, wenn es sich in dem Spalt 34 befindet. Die Beutel werden auf diese Weise oben verschlossen.

Die Vorrichtung 10 umfasst ferner eine Sensoreinheit 60 mit einem Sensor 62. Der Sensor 62 weist einen Detektionsbereich auf, in den die Produkte 100 bewegt werden, wenn sie vor dem Spalt 34 ankommen, also bevor sich das jeweilige Produkt 100 in dem Spalt 34 befindet. Dieser Zustand ist in Figur 2 dargestellt. Wenn sich kein Produkt 100 in dem Spalt befindet, regt der Generator die Schwingeinheit 40 derart an, dass die Sonotrode 42 mit der niedrigen Amplitude A_{low} schwingt.

Der Sensor 62 ist zu dem Spalt 34 beabstandet angeordnet, wobei der Abstand bekannt ist. Da auch die Geschwindigkeit der Beutel bekannt ist, kann daraus die Zeit berechnet werden, welche zwischen Detektion und Eintritt des Beutels in den Spalt vergeht (Zeit = Abstand / Geschwindigkeit). Der Sensor 62 übermittelt ein Detektionssignal direkt an den Generator 36 des Ultraschallwerkzeugs 30. Nach einer voreingestellten Zeitverzögerung regt der Generator 36 die Schwingeinheit 40 die Sonotrode 42 derart an, dass sie mit der hohen Amplitude A_{high} schwingt. Die Zeitverzögerung wird in Abhängigkeit von dem Abstand des Sensors 62 von dem Spalt 34 und der Geschwindigkeit der Beutel gewählt (siehe oben).

Der Abstand zwischen dem Sensor 62 und dem Ende des Spalts 34 ist ebenfalls bekannt. In Kombination mit der Geschwindigkeit der Produkte 100 lässt sich demnach auch bestimmen, wann ein erfasstes Produkt 100 den Spalt 34 verlässt. Der Generator 36 regt daher nach einer weiteren Zeitverzögerung die Schwingeinheit 40 wieder derart an, dass sie mit der niedrigen Amplitude A_{low} schwingt. Alternativ kann die Umstellung auf A_{low} auch dadurch ausgelöst werden, dass der Sensor 62 das Produkt 100 nicht mehr erfasst. Auch hier kann eine vorgegebene Zeitverzögerung vorgesehen werden.

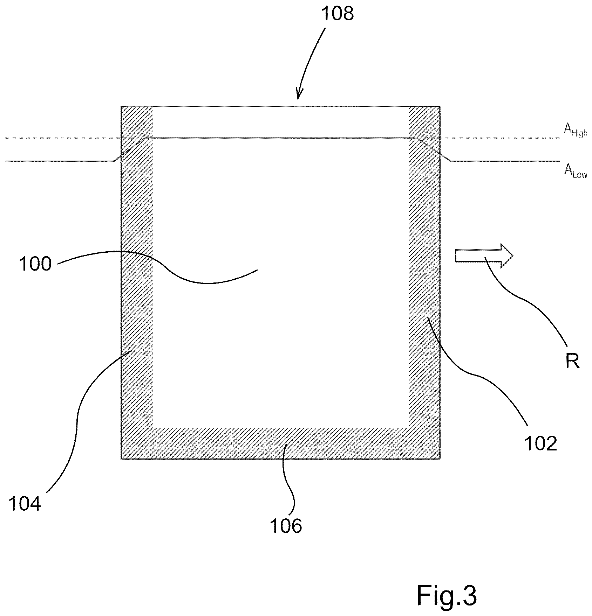

Der Übergang von A_{high} auf A_{low} und umgekehrt erfolgt nicht schlagartig, sondern stetig und gleichmäßig. Dieser Übergang ist schematisch in der Figur 3 dargestellt. Das zu verschweißende Produkt 100 ist wie oben erwähnt ein Beutel, der am oberen Ende 108 offen ist. In seinen Randbereichen 102, 104 und am Boden 106 ist der Beutel bereits stoffschlüssig verschlossen. Daher kann der Beutel vor dem Verschließen mit Inhalt befüllt werden. Die Förderrichtung R ist auch hier dargestellt.

Ebenfalls in der Figur 3 schematisch dargestellt ist die Veränderung der Amplitude der Sonotrode 42 während der Bewegung des Beutels. Im Ausgangszustand schwingt die Sonotrode 42 mit der niedrigen Amplitude A_{low}. Der Randbereich 102 des Beutels trifft zuerst auf das Ultraschallwerkzeug 30. Der Sensor 62 erkennt zuvor, wie oben beschrieben, dass das Produkt 100 in die Nähe des Spalts 34 gelangt. Daraufhin wird die Amplitude der Sonotrode 42 auf die hohe Amplitude A_{high} eingestellt. Der Übergang von A_{low} auf A_{high} erfolgt entlang einer Rampe, also stetig und gleichmäßig. Die Erhöhung der Amplitude beginnt kurz bevor der Randbereich 102 in den Spalt 34 eintritt. Die hohe Amplitude A_{high} wird erreicht, noch bevor der Randbereich 102 vollständig in dem Spalt 34 angeordnet ist. Die Rampe überlappt also mit dem Randbereich 102.

Verlässt der zweite Randbereich 104 den Spalt 34, wird die Amplitude der Sonotrode 42 entlang einer Rampe verringert bis auf die niedrige Amplitude A_{low}. Der Beginn der Verringerung erfolgt dabei kurz nachdem der Randbereich 104 den Spalt 34 verlassen hat. Die Verringerung endet kurz nachdem der Randbereich 104 vollständig den Spalt 34 vollständig verlassen hat.

Durch die gezielte Erhöhung und Verringerung der Amplitude wird sichergestellt, dass die gewünschte Verschweißung vollständig mit der hohen Amplitude A_{high} erfolgt. Der Pfad, entlang dem der Beutel verschweißt wurde, wird als Schweißpfad bezeichnet. Bei der gezeigten Ausführungsform beginnt der Schweißpfad somit in dem Randbereich 102 und endet in dem Randbereich 104. Dieses Vorgehen hat sich mit Blick auf die Qualität der Bearbeitung, insbesondere an den Kanten des Beutels, bewährt. Die Verschweißung beginnt und endet gewissermaßen in den Randbereichen 102, 104, wodurch die Kanten des Beutels weitgehend in ihrem vorherigen Zustand verbleiben. Der zuvor offene Bereich des Beutels wird auf diese Weise sicher verschlossen und die Kanten bleiben weitgehend unbeeinträchtigt.

### Bezugszeichenliste

- 10: Vorrichtung

- 20: Fördereinrichtung
- 22: Förderband
- 24: Greifelemente

- 30: Ultraschallwerkzeug
- 32: Amboss
- 34: Spalt
- 36: Generator

- 40: Schwingeinheit
- 42: Sonotrode
- 44: Amplitudenverstärker
- 46: Konverter

- 60: Sensoreinheit
- 62: Sensor

- 100: Produkt
- 102: Randbereich
- 104: Randbereich
- 106: Boden
- 108: oberes Ende

- R: Förderrichtung
- S: Spaltbreite

## Patentansprüche

1. Verfahren zum Verschweißen eines vereinzelten, mehrlagigen Produkts mittels eines Ultraschallwerkzeugs, welches einen Generator, eine Sonotrode und einen Amboss umfasst, wobei das Produkt durch einen zwischen Sonotrode und Amboss gebildeten Spalt mit einer Spaltbreite S bewegt wird,
wobei das Produkt während seiner Bewegung von dem Ultraschallwerkzeug entlang eines Schweißpfades verschweißt wird, indem Sonotrode und/oder Amboss mit einer Kraft gegen das Produkt gedrückt werden und die Sonotrode von dem Generator derart angeregt wird, dass sie mit einer vorgegebenen Amplitude schwingt und die Schwingung auf das Produkt überträgt,
wobei mindestens ein Schweißparameter, vorzugsweise die Amplitude und/oder die Kraft und/oder die Spaltbreite während der Bewegung des Produkts geregelt und variiert wird.

2. Verfahren nach Anspruch 1, wobei der Schweißpfad in einem ersten Randbereich des Produkts beginnt und/oder in einem zweiten Randbereich des Produkts endet, wobei die Produkte bevorzugt in mindestens einem der Randbereiche stoffschlüssig verschlossen werden, bevor sie durch den Spalt bewegt werden.

3. Verfahren nach einem der vorhergehenden Ansprüche, wobei die Sonotrode zum Verschweißen des Produkts derart angeregt wird, dass sie mit einer Amplitude A_{high} schwingt, wobei A_{high} bevorzugt zwischen 20 µm und 40 µm beträgt, und die Sonotrode zu anderen Zeiten derart angeregt wird, dass sie mit einer Amplitude A_{low}, die kleiner als A_{high} ist, schwingt, wobei bevorzugt Folgendes gilt: 0 < A_{low} < 0,5 * A_{high}.

4. Verfahren nach Anspruch 3, wobei die Amplitude auf A_{high} eingestellt wird, wenn das Produkt am oder vor dem Spalt ankommt und/oder wobei die Amplitude auf A_{low} eingestellt wird, wenn das Produkt den Spalt verlässt.

5. Verfahren nach Anspruch 3 oder 4, wobei mittels einer Sensoreinheit erfasst wird, ob das Produkt am Spalt ankommt oder das Produkt den Spalt verlässt, und die Sensoreinheit ein Signal direkt an den Generator sendet und der Generator, optional zeitverzögert, die Amplitude auf A_{high} oder A_{low} einstellt.

6. Verfahren nach einem der Ansprüche 3 bis 5, wobei ein Übergang von einer aktuellen Amplitude A_{now} auf eine Zielamplitude, insbesondere A_{high} oder A_{low}, durch eine kontinuierliche Anpassung (Rampe) der Amplitude erfolgt, wobei eine Steigung der Rampe bevorzugt kontinuierlich geregelt wird und/oder wobei die Rampe innerhalb eines der Randbereich liegt oder mit einem der Randbereiche überlappt.

7. Verfahren nach einem der vorhergehenden Ansprüche, wobei die Spaltbreite S des Spaltes kontinuierlich eingestellt wird, indem Sonotrode und/oder Amboss relativ zueinander bewegt werden, wobei bevorzugt eine Metallkontakterkennung und/oder eine Abstandsmessung als Eingangsgröße für eine Regelung der Größe des Spalts verwendet wird und/oder eine Sollgröße für den Spalt festgelegt und als Eingangsgröße für die Regelung der Spaltbreite S verwendet wird.

8. Verfahren nach einem der vorhergehenden Ansprüche, wobei mehrere Produkte nacheinander durch den Spalt bewegt und jeweils entlang eines Schweißpfades verschweißt werden.

9. Verfahren nach einem der vorhergehenden Ansprüche, wobei das Produkt mit Inhalt befüllt wird, bevor es durch den Spalt bewegt und verschweißt wird, und/oder das Produkt mit einer Geschwindigkeit von 5 m/min bis 100 m/min durch den Spalt bewegt wird und/oder das Produkt wenigstens zwei Lagen umfasst, bevorzugt mit einer Lagendicke von jeweils zwischen 50 µm und 300 µm.

10. Vorrichtung zum Verschweißen eines vereinzelten, mehrlagigen Produkts mit:
- einem Ultraschallwerkzeug, welches einen Generator, einen Konverter, eine Sonotrode und einen Amboss umfasst, wobei zwischen Sonotrode und Amboss ein Spalt mit einer Spaltbreite S gebildet wird, wobei der Generator eingerichtet ist, die Sonotrode derart anzuregen, dass diese mit einer Amplitude schwingt und wobei das Ultraschallwerkzeug eingerichtet ist, Sonotrode und/oder Amboss mit einer Kraft gegen das Produkt zu drücken, wobei mindestens ein Schweißparameter des Ultraschallwerkzeugs, vorzugsweise die Amplitude und/oder die Kraft und/oder die Spaltbreite, regelbar und variierbar ist, und
- einer Fördereinrichtung, die eingerichtet ist, das vereinzelte Produkt durch den Spalt zu bewegen, bevorzugt derart zu bewegen, dass das Produkt während seiner Bewegung von dem Ultraschallwerkzeug entlang eines Schweißpfades verschweißt wird, indem die Sonotrode von dem Generator derart angeregt wird, dass sie mit einer vorgegebenen Amplitude schwingt und die Schwingung auf das Produkt überträgt.

11. Vorrichtung nach Anspruch 10, wobei ferner eine Sensoreinheit vorgesehen ist, welche eingerichtet ist, zu erfassen, ob das Produkt am oder vor dem Spalt ankommt oder ob das Produkt den Spalt verlässt, wobei die Sensoreinheit bevorzugt direkt mit dem Generator verbunden ist.

12. Vorrichtung nach Anspruch 11, wobei die Sensoreinheit mindestens einen Sensor umfasst, bevorzugt einen optischen Sensor und/oder einen kapazitiven Sensor, welcher derart ausgerichtet ist, dass das Produkt in einen Detektionsbereich des Sensors und/oder aus einem Detektionsbereich des Sensors bewegt wird, wenn es am oder vor dem Spalt ankommt und/oder wenn es den Spalt verlässt.

13. Vorrichtung nach einem der Ansprüche 10 bis 12, wobei die Fördereinrichtung bewegbare Greifer umfasst, die eingerichtet sind, jeweils eines oder mehrere Produkte zu greifen.

14. Vorrichtung nach einem der Ansprüche 10 bis 13, wobei die Sonotrode und/oder der Amboss eine zumindest teilweise kreisförmige Außenkontur aufweist und drehbar gelagert ist.

15. Vorrichtung nach einem der Ansprüche 10 bis 14, wobei die Sonotrode und/oder der Amboss relativ zueinander verschiebbar sind, wobei bevorzugt eine Spaltregelungseinrichtung elektrisch an eine Metallkontakterkennungseinrichtung angeschlossen ist und/oder ein Sensor zur Erfassung eines Abstands zwischen Sonotrode und Amboss vorgesehen ist.
